# EUROPEAN PATENT APPLICATION

(11) **EP 4 597 476 A1**
(43) Date of publication of application: **06.08.2025**
(21) Application number: 24167913.3
(22) Date of filing: 29.03.2024
(51) Int. Cl.: G09B 5/06, G09B 5/12, G09B 9/00, G09B 19/00, G09B 19/24

(54) **MULTI-TENANCY VIRTUAL REALITY (VR) SYSTEM WITH REAL-TIME DATA TRACKING FOR TRAINING PERFORMANCE EVALUATION, USER ACCESS AUTHENTICATION AND BACK OFFICE MANAGEMENT, AND METHOD THEREOF**

(30) Priority: 01.02.2024 MY PI2024000716
(71) Applicant: Virtual X Sdn. Bhd., 47500 Subang Jaya Selangor (MY)
(72) Inventor: Zi Shen, Jerome Kay, 58100 Wilayah Persekutuan Kuala Lumpur (MY); Yoke Wee, Lau, 93350 Kuching Sarawak (MY); Yip, Chok Meng Yap Chok Meng, 47100 Puchong Selangor (MY); Li Chen, Yap, 43300 Seri Kembangan Selangor (MY)
(74) Representative: Argyma

(57) **Abstract**

The present invention discloses a multi-tenancy virtual reality, VR, system for providing hands-on VR environment, training, and evaluation therefor, and a method thereof. The multi-tenancy VR system comprises a central platform (100) comprising a user platform (101) and a back office (102) connected to a server (103); and a VR training module (200) in communication with the central platform (100) comprising a source code module (201) configured for selectively rendering one or more VR contents representing the hands-on VR environment, training, and evaluation to a trainee on the user platform (101) via the server (103). The source code module (201) comprises a VR plugin or component having a division code embedded therein, which permits real-time data tracking by the VR plugin or component that collects division data, including time taken and status of division completion by the trainee with respect to the one or more VR contents rendered thereof.

## Description

### FIELD OF THE INVENTION

The present invention generally relates to the field of virtual reality. More particularly, the present invention relates to a multi-tenancy virtual reality (VR) system for providing hands-on VR environment, training, and evaluation therefor and a method thereof.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognised in the prior art. The subject matter in the background section merely represents different approaches, which in and of themselves may also correspond to implementations of the claimed technology.

Employee training is vital as it helps employees learn specific knowledge or skills to acquire new or improve their job duties. An employer must provide employees with the necessary information, instruction, training, and supervision needed to ensure, so far as is reasonably practicable, the health and safety of employees at work. Adequate training in workplace safety can provide a significant boost to employee morale, spot potential risks in the workplace and eliminate some hazards.

Working in a high-risk environment comes with a greater chance of an accident occurring, no matter how cautious employees may be. Although every job entails some risk for injury, the magnitude of risk varies widely across jobs, sectors, geographic regions, and individuals. More engaging or interactive types of hands-on training may help employees become more aware of potential hazards and threats they face on the job and avoid making deadly mistakes or preventing accidents. At jobs where the likelihood of death or injury was highest, the findings showed that more engaging training (e.g., hands-on training) is considerably more effective than less engaging training (such as lectures, films, reading materials and videos).

Virtual reality (VR) is increasingly used by employers or training providers to give a realistic job preview or scenario for training purposes and skill development to employees. It refers to a computer-generated, three-dimensional (3D) virtual environment that users can interact with, typically accessed via a computer that is capable of projecting 3D information (for instance, unique scenarios in which users can learn through virtual environments, including how to address potential mistakes on the job) via a display, which can be isolated screens or a wearable display, e.g., a head-mounted display, along with user identification sensors. VR can provide a safe and responsive environment for learning a range of skills and stimulating behavioural change in users, e.g., employees. This also enables employees to safely make mistakes without risking their own lives or the lives of others and learn correct responses.

Using VR for training is nothing new. But, in recent years, there have been considerable technological advancements. Enabling a dedicated VR multi-tenancy infrastructure that offers various tenants or clients more flexibility, control, and security, however, remains extraordinarily challenging in VR industries. In a multi-tenant environment, users are separated from each other at the virtual level, but the hardware is not isolated, and users share the hardware. Other than that, the existing VR systems still suffer from the inability to accurately track temporal data and states of various trainings as well as to evaluate training performance associated with users performing a specific task. It is, therefore, desirous of addressing the foregoing problems and shortcomings by developing an improved VR system with multi-tenancy infrastructure for, among others, providing hands-on training at reduced costs, labour, and time as well as ease of use. It would also be desirable that the multi-tenancy VR system is capable of real-time data tracking for training performance evaluation, user access authentication and back office management.

By way of background, United States Patent No. US 2019/0392728 A1 (hereinafter "the `728 publication") discloses a virtual reality training system for industrial labour applications. Users wear virtual reality equipment including a head-mounted device, and enter a virtual worksite replete with VR industrial equipment, VR hazards, and virtual tasks. According to the `728 publication, through the course of completing the tasks, a plurality of sensors monitors the performance of the user or users and identify knowledge gaps and stresses of the user(s). The system of the '728 publication generates an evaluation associated with the user(s) and then informs the user where there is room for improvement and informs an administrator of potential liabilities latent within evaluated employees.

For the reasons stated above and for other reasons that will become apparent to those skilled in the art upon reading and understanding the specification, there is a need for an improved multi-tenancy VR system in the art. Although there may be similar approaches to the same in prior art, there is still considerable room for improvement for many practical purposes.

### SUMMARY OF THE INVENTION

The following presents a simplified summary of the invention in order to provide a basic understanding of some aspects of the invention. This summary is not an extensive overview of the invention. Its sole purpose is to present some concepts of the invention in a simplified form as a prelude to the more detailed description that is presented later.

Accordingly, the present invention provides a multi-tenancy virtual reality (VR) system for providing hands-on VR environment, training, and evaluation therefor. The multi-tenancy VR system of the present invention may be characterised by a central platform comprising a user platform and a back office connected to a server; and a VR training module in communication with the central platform comprising a source code module configured for selectively rendering one or more VR contents representing the hands-on VR environment, training, and evaluation to a trainee on the user platform via the server, wherein the source code module comprises a VR plugin or component having a division code embedded therein which permits real-time data tracking by the VR plugin or component that collects division data including time taken and status of division completion by the trainee with respect to the one or more VR contents rendered thereof.

Preferably, the VR plugin or component comprises an access authentication component embedded therein, which permits access authentication by the VR plugin or component that communicates a token code received from the user platform with the server.

Preferably, the VR plugin or component comprises a module code and a tenant code embedded therein, which, together with the division code, permits data upload and pairing between the VR training module and the back office thereof.

Preferably, the division code is represented by a string of alphanumerical characters.

Preferably, the module code is represented by a string of alphanumerical characters.

Preferably, the tenant code is represented by a string of alphanumerical characters.

Preferably, the source code module comprises three-dimensional model and coding assets.

Preferably, the division code includes a sub-procedure code, a procedure code, and a chapter code adapted for permitting real-time data tracking by the VR plugin or component that collects sub-procedure data including time taken and status of sub-procedure completion by the trainee, procedure data including time taken and status of procedure completion by the trainee, and chapter data including time taken and status of chapter completion by the trainee, respectively.

Preferably, the VR plugin or component, by way of the sub-procedure code, accumulates the sub-procedure data collected thereof to produce the procedure data, which, in turn, is accumulated to produce the chapter data which accumulatively becomes module session data.

Preferably, the server includes a cloud server, an on-premises server, and any combination thereof comprising a database from which the one or more VR contents, online and/or offline, are communicated between the VR training module and the user platform, and from which the token code transmitted from the VR plugin is authenticated.

In accordance with another aspect, the present invention provides a method of providing hands-on VR environment, training, and evaluation therefor. The method of the present invention may be characterised by the steps of providing a multi-tenancy VR system comprising a central platform having a user platform and a back office connected to a server, and a VR training module in communication with the central platform comprising a source code module, wherein the step of providing a multi-tenancy VR system includes preparing the source code module comprising a VR plugin or component having a division code embedded therein; selectively rendering, by the VR training module, one or more VR contents representing the hands-on VR environment, training, and evaluation to a trainee on the user platform via the server; and initiating, by the VR plugin or component by way of the division code, real-time data tracking comprising collecting division data including time taken and status of division completion by the trainee with respect to the one or more VR contents rendered thereof.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

A more complete appreciation of the invention and many of the attendant advantages thereof will be readily as the same becomes better understood by reference to the following detailed description when considered in connection with the accompanying drawings, wherein:

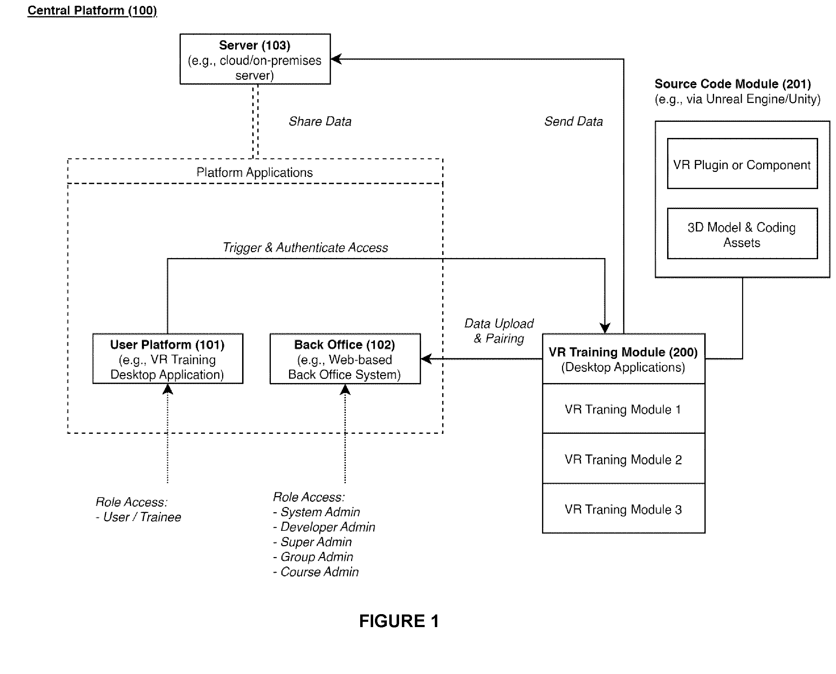

Figure 1 is a schematic diagram showing a multi-tenancy virtual reality (VR) system for providing hands-on VR environment, training, and evaluation therefor, according to one embodiment of the present invention;

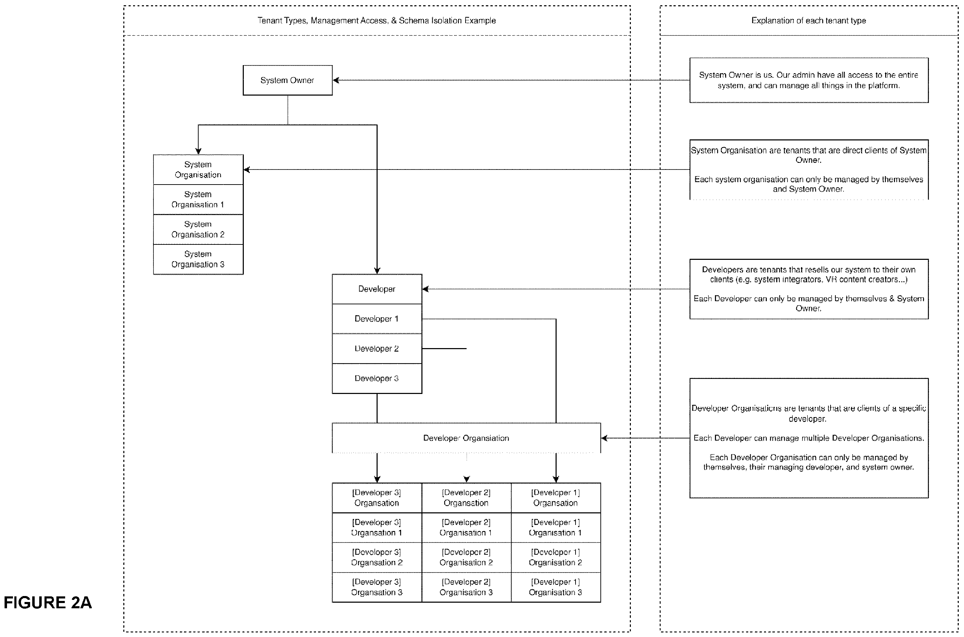

Figure 2A is a flow diagram showing the tenant types, management access and schema isolation according to one embodiment of the present invention;

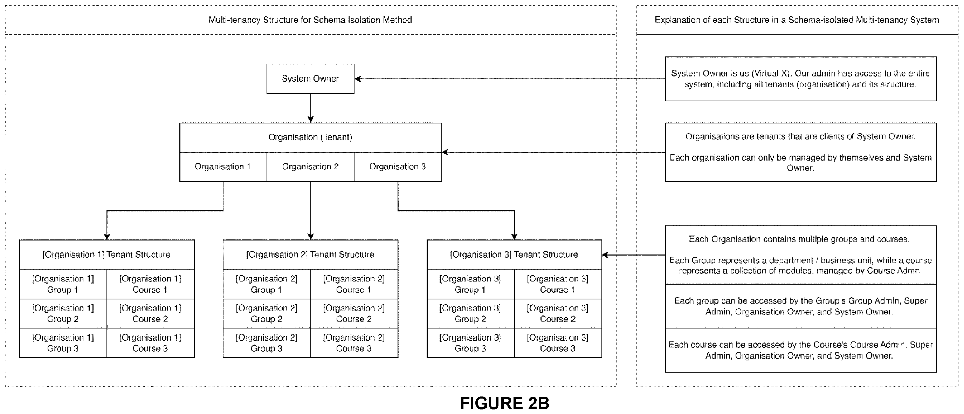

Figure 2B is a flow diagram showing the tenant types, management access and schema isolation according to another embodiment of the present invention;

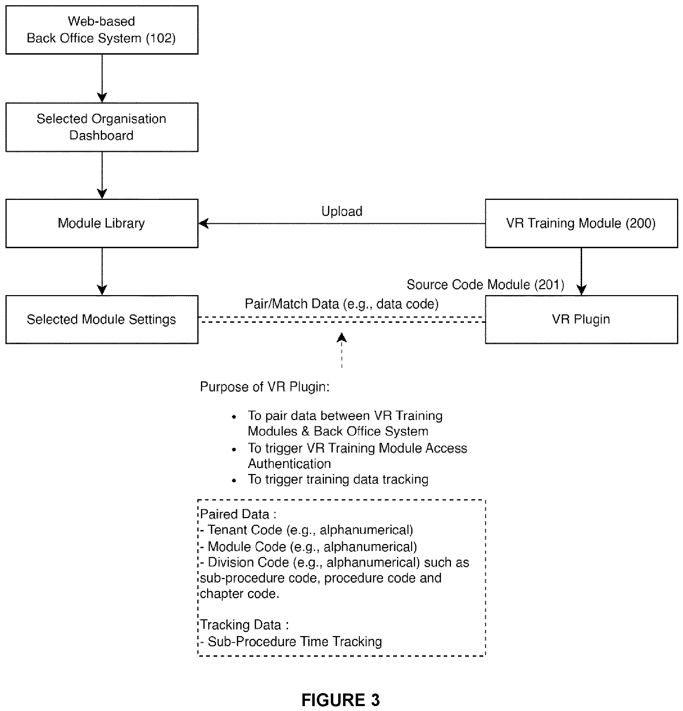

Figure 3 is a flow diagram showing the VR plugin or component employed in the multi-tenancy VR system according to one embodiment of the present invention;

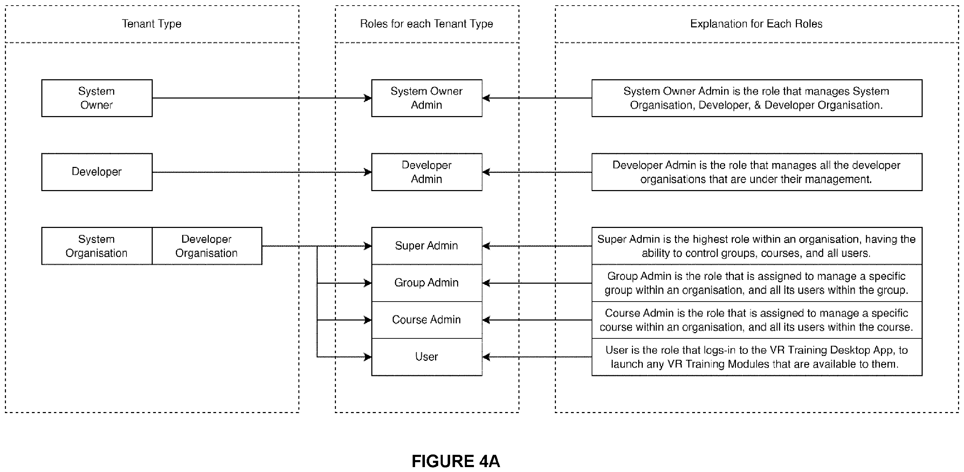

Figure 4A is a flow diagram showing the tenant types and roles for each tenant type according to one embodiment of the present invention;

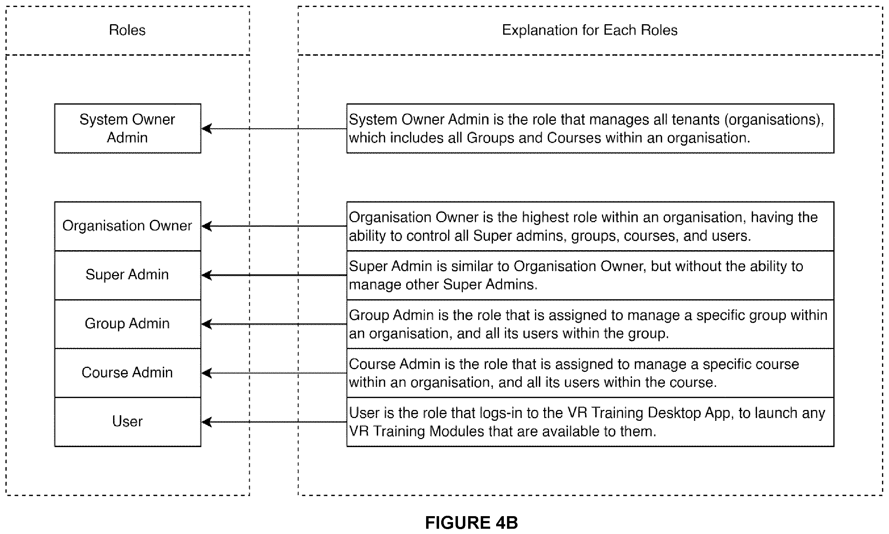

Figure 4B is a flow diagram showing the tenant types and roles for each tenant type according to another embodiment of the present invention;

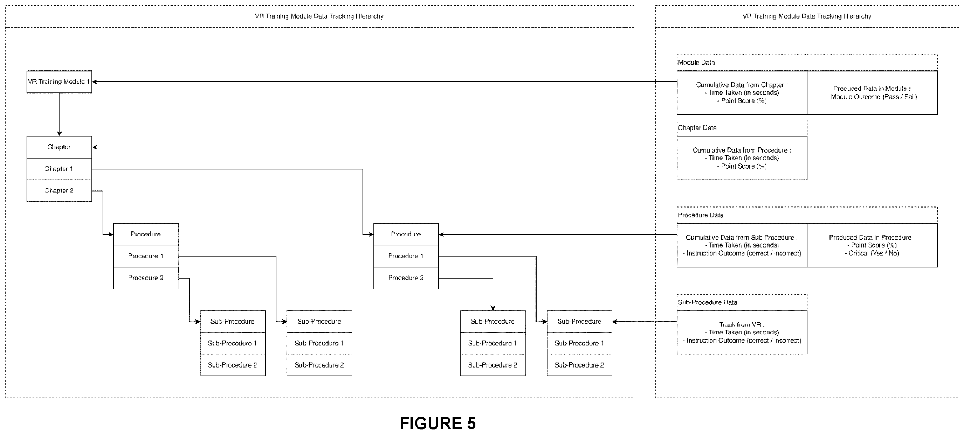

Figure 5 is a flow diagram showing the VR training module data tracking hierarchy according to one embodiment of the present invention;

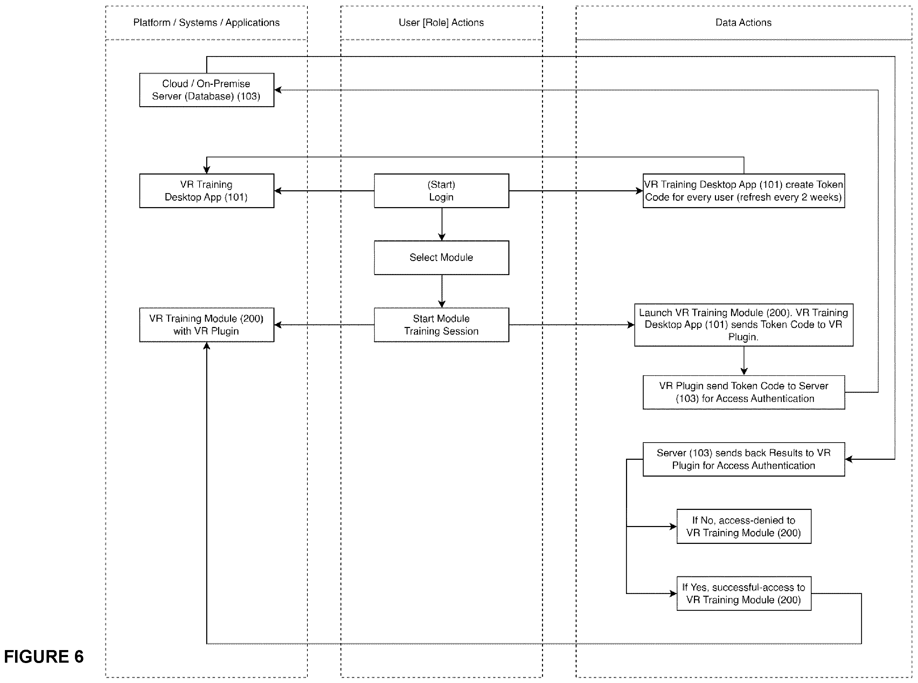

Figure 6 is a flow diagram showing the platform/systems/applications, user (role) actions, and data actions associated thereof according to one embodiment of the present invention;

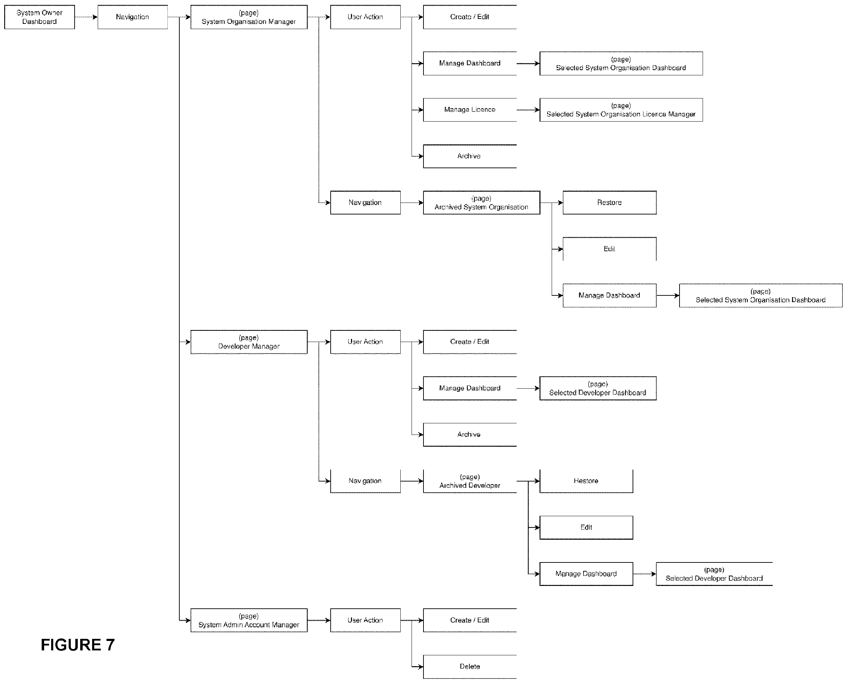

Figure 7 is a flow diagram showing the system dashboard according to one embodiment of the present invention;

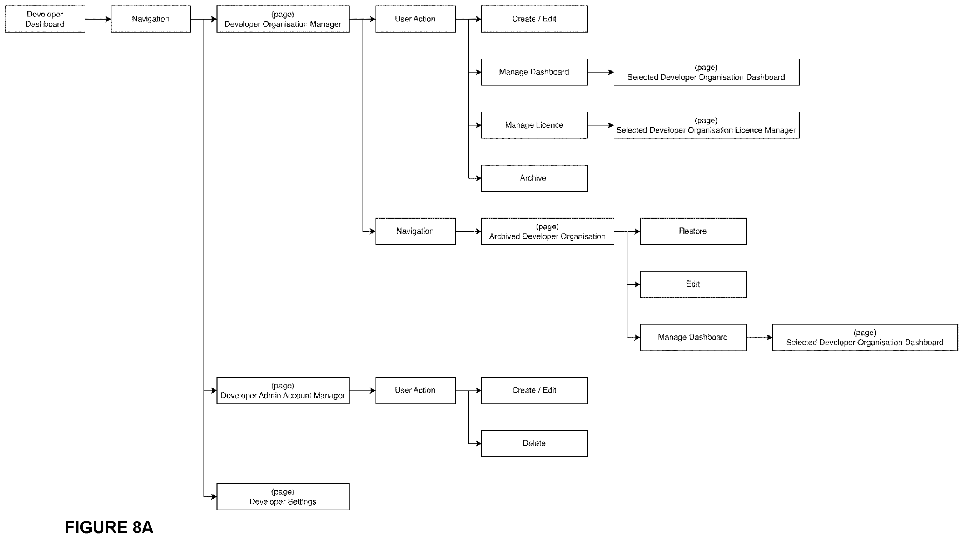

Figure 8A is a flow diagram showing the developer dashboard according to one embodiment of the present invention;

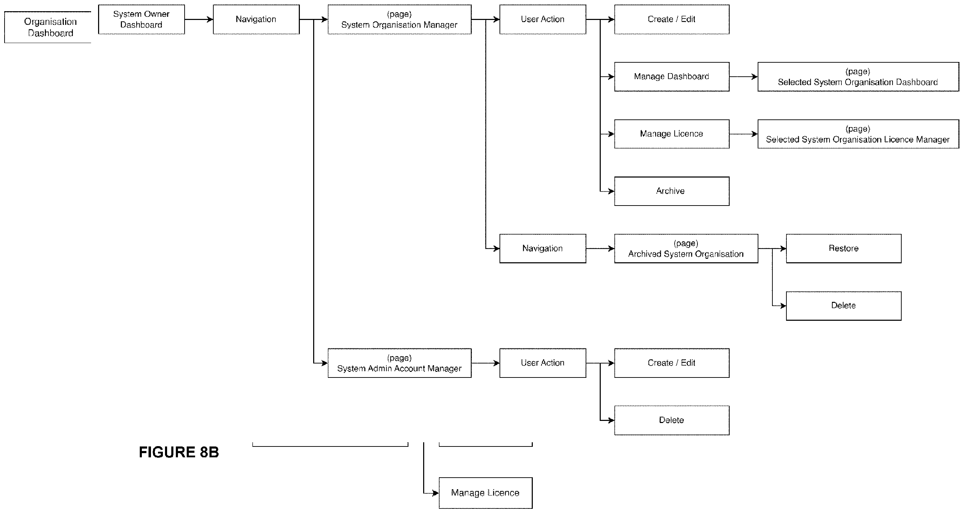

Figure 8B is a flow diagram showing the developer dashboard according to another embodiment of the present invention;

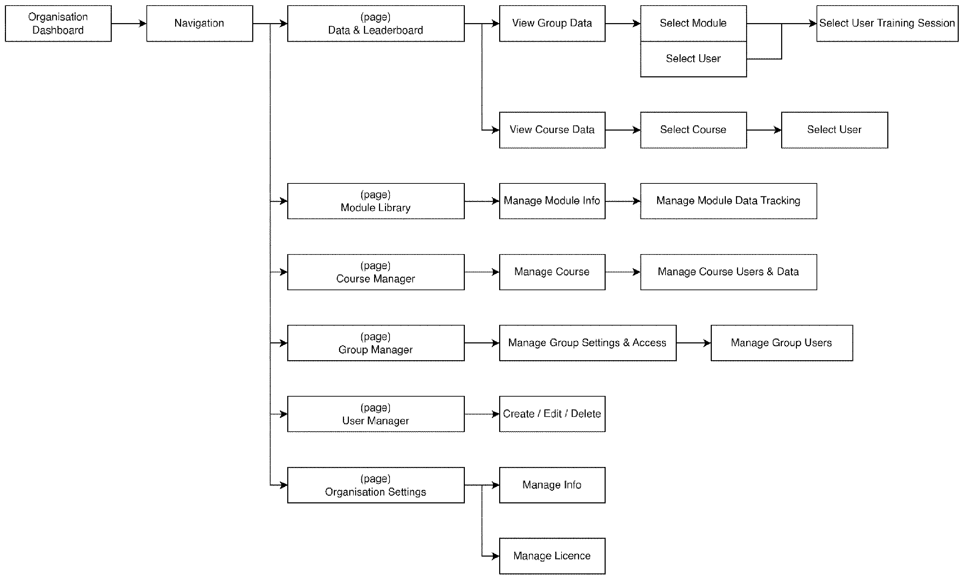

Figure 9A is a flow diagram showing the organisation dashboard according to one embodiment of the present invention;

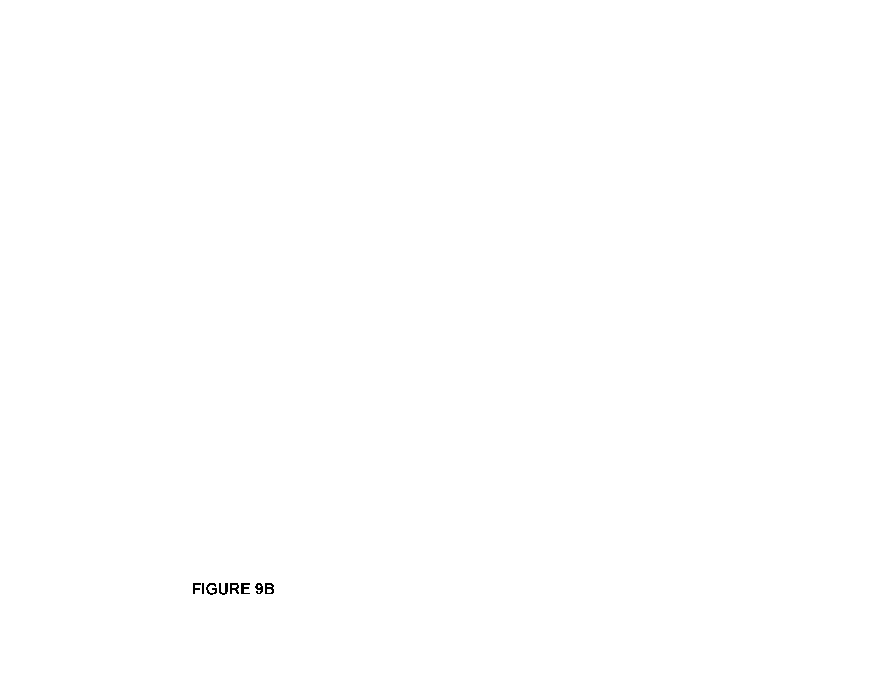

Figure 9B is a flow diagram showing the organisation dashboard according to another embodiment of the present invention; and

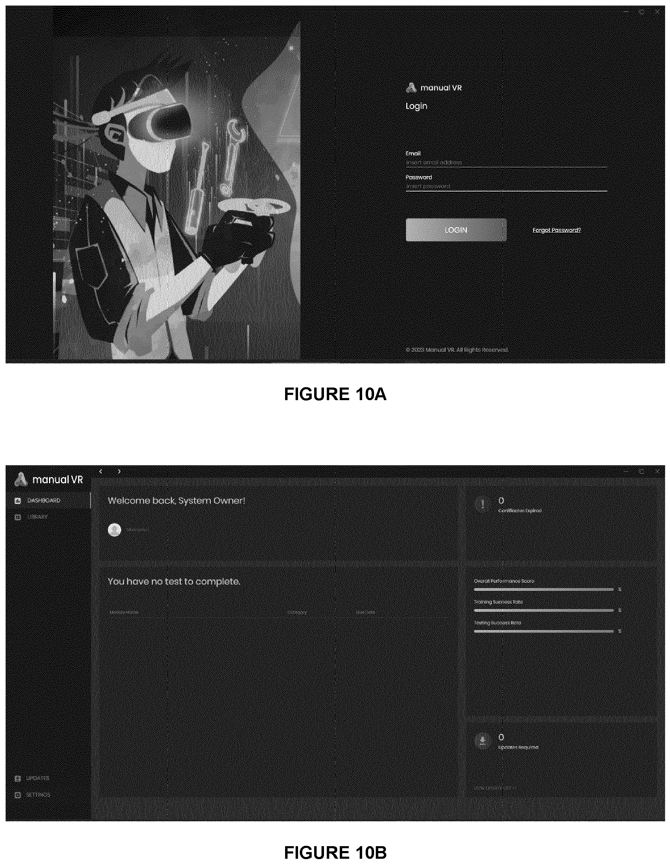

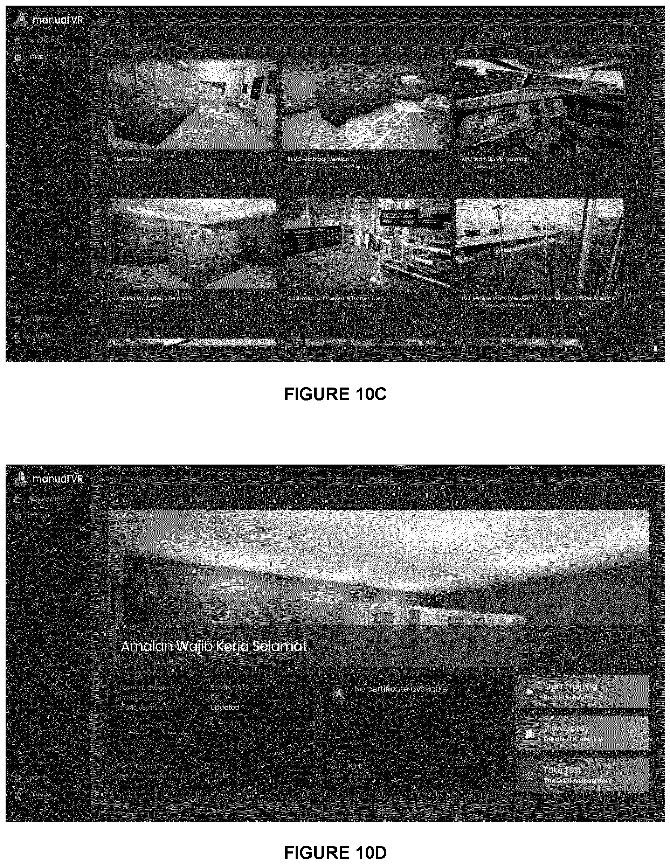

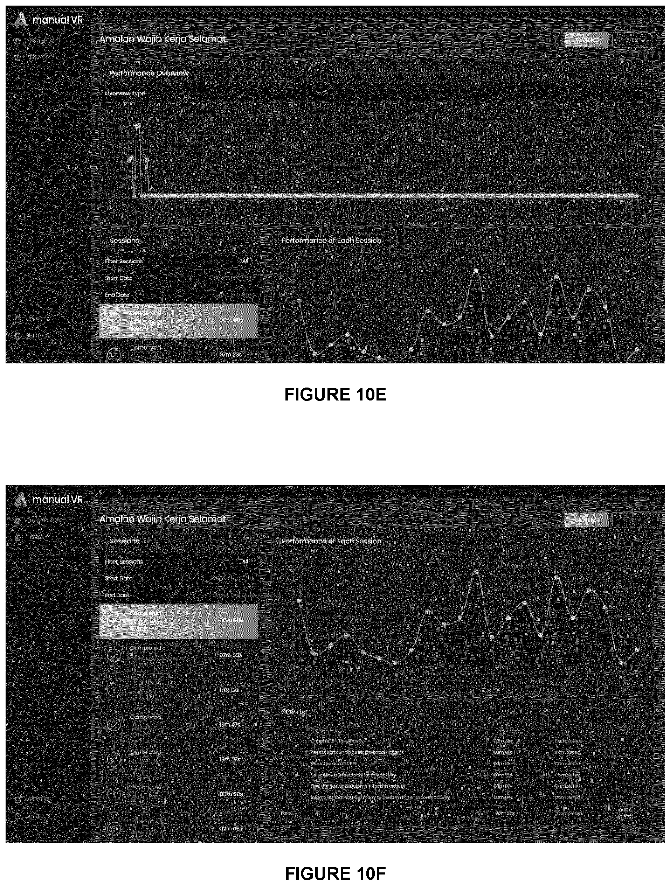

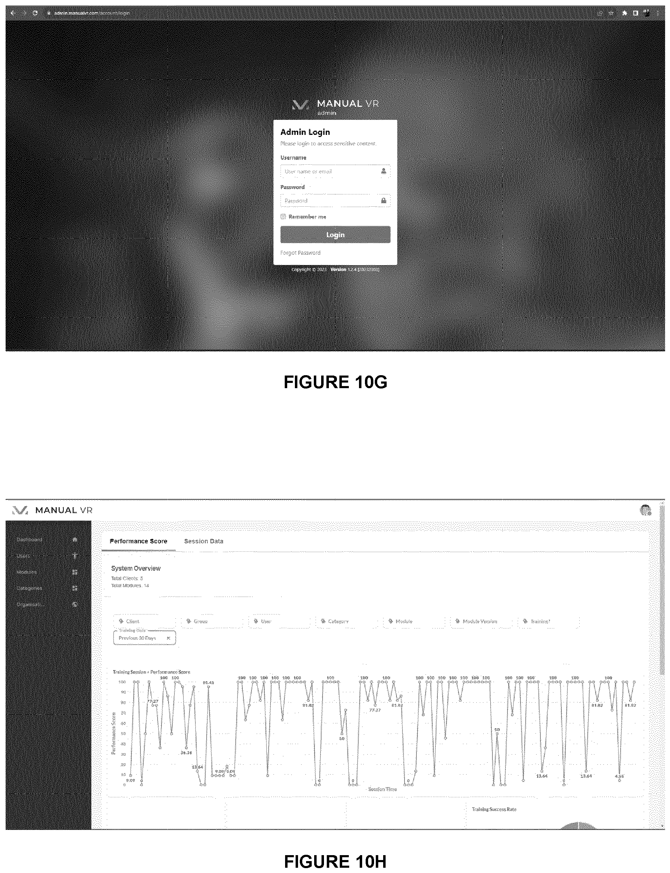

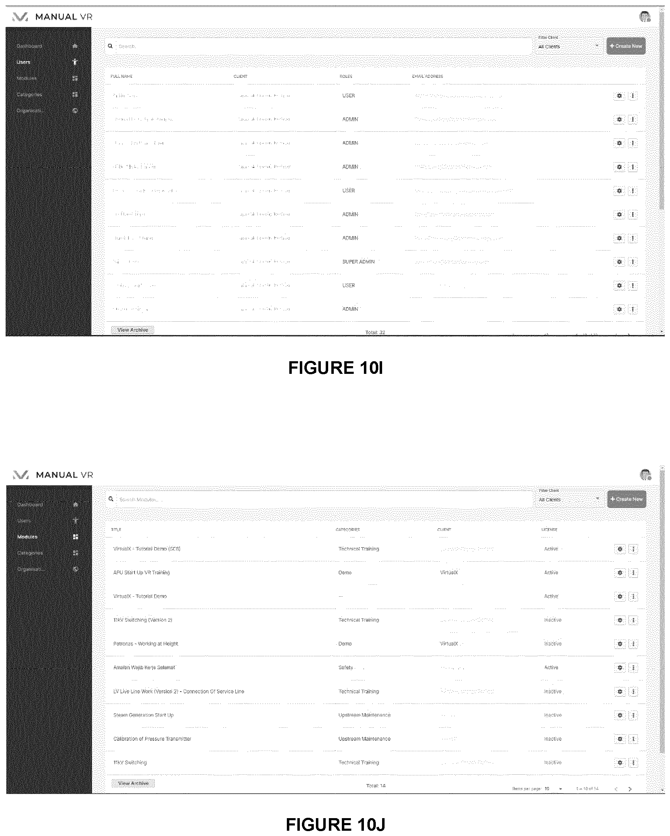

Figures 10A-10J show exemplary dashboard screenshots according to one embodiment of the present invention.

It is noted that the drawings may not be to scale. The drawings are intended to depict only typical aspects of the invention, and therefore should not be considered as limiting the scope of the invention.

### DETAILED DESCRIPTION OF THE INVENTION

The present invention discloses a multi-tenancy virtual reality (VR) system suitable for, among others, providing hands-on VR environment, training, and evaluation therefor and a method thereof, that can be made, used, and maintained in a highly specific and compact, cost-effective, quick, and simple manner, without the use of complicated and sophisticated steps, components, or parts. The multi-tenancy VR system of the present invention may be used for various trainings in a wide range of industries, including those that teach skills that require hands-on practice, such as operating machinery, performing surgery, and flying a plane as well as others requiring real-life or life-like scenarios which teach important skills, knowledge, and concepts.

Advantageously, the present invention enables a dedicated VR multi-tenancy infrastructure which offers various tenants or clients more flexibility, control, and security with the capability of accurately tracking temporal data and states of various trainings in a real-time manner, conducting evaluation (e.g., scoring and certification) on training performance associated with users performing a specific task. The term "temporal data" may refer to data associated with time, time of day, day of month, month of year, any other temporal data, and mixtures or combinations thereof. More advantageously, the present invention is capable of performing user access authentication and back office management, all in one place. Without a back office management, it is difficult for users to self-manage their training and content. Therefore, they have to always come back to their vendors for assistance. This results in super high cost (VR development itself, in general, is already costly) that is prohibitive, therefore, becomes not a scalable solution.

The multi-tenancy VR system of the present invention, which is based on schema isolation, demonstrates the capability of a computer-implemented architecture (e.g., software architecture) to serve multiple clients/tenants (e.g., enterprises) through a single instance or single version of a platform like a software, which allows multiple clients/tenants to share the same resources provided by a service provider. The multi-tenancy VR system of the present invention allows a developer to develop the platform using one source code, which can be used to serve multiple clients/tenants to increase their efficiency without compromising the security of their data. Further, the multi-tenancy VR system of the present invention provides easy updates to platform applications as per clients' requests. Through multi-tenancy, the service provider allows clients/tenants of all sizes to share the same cloud infrastructure (management server, streaming server, playback server, cloud storage, and Content Delivery Network (CDN), etc.) and data centre. Unlike single-tenant architecture, where service providers have to maintain exclusive VR infrastructure for each client, in a multi-tenant architecture like the present invention, service providers have to manage only one set of infrastructure for any number of clients/tenants. The present invention is also capable of hosting multiple VR training module applications (platforms) in one infrastructure.

The term "virtual reality", as used herein, may refer, without limitation, to a simulated interactive user experience that provides an enhanced environment (i.e., VR environment) perceivable by the user or trainee and wherein such enhanced environment may be similar to or different from a real-world environment. In one embodiment, the term encompasses a scene that is entirely computer-generated and displayed in a virtual reality (VR) device (e.g., goggles or a VR headset), and that changes to correspond to movement of the wearer of the VR device. The wearer of the goggles can therefore look and "move" around in the virtual world created by the VR device.

The term "virtual reality device" or "VR device", as used herein, refers to a computing device that generates a digital, three-dimensional representation of a virtual environment. In particular, the term "virtual reality device" includes a computing device (e.g., goggles, headset or head-mounted display) that generates a digital, three-dimensional view of a virtual environment that simulates a user's physical presence through a generated sensory experience (e.g., immersive visual display, speakers, etc.). To illustrate, a VR device includes a head-mounted display that generates an immersive three-dimensional representation of a virtual environment that modifies a view of the virtual environment based on user movements to simulate physical presence in the virtual environment. Moreover, a VR device can also comprise one or more sensors that detect user interaction. For example, a VR device can comprise optical sensors, clothing, gloves, or other sensors to detect movements and/or hand gestures of a user. Similarly, the VR device can comprise a user input device, such as a controller, remote control, joystick, or keyboard. In addition, a VR device can include (and/or be operatively connected to) one or more biometric sensors to detect biometric data.

The term "application", as used herein, may generally refer to a logical deployment unit that includes one or more application components. Each "application component" may include any suitable software code, such as software services, scripts, code components, application-specific packages, custom script packages, etc. The application may be a single-tier, or multi-tier, in which case functions of the application are distributed over logically separate application components.

The term "real-time", as used herein, refers to the actual time during which a process or event (e.g., data tracking) occurs. In other words, a real-time event is done live (within milliseconds so that results are available immediately as feedback). For example, a real-time event can be represented within 100 milliseconds of the event occurring. The term also encompasses a process or event (e.g., data tracking) executed without intentional delay and/or substantially no significant time delay.

The multi-tenancy VR system of the present invention preferably comprises a central platform 100 and a VR training module 200 in communication with the central platform 100.

In accordance with one preferred embodiment of the present invention, the central platform 100 preferably comprises a user platform 101, a back office 102, and a server 103. The server 103 is preferably connected to the user platform 101 and the back office 102. It is preferred that the user platform 101, the back office 102, and the server 103 are in communication and/or operatively connected to the VR training module 200, wirelessly and/or wired. The user platform 101 and the back office 102 preferably form an application platform. The term "application platform", as used herein, is generally defined as any computer device or software application residing remotely from the user platform that executes an application program to perform some kind of activity or transaction with the user. The application platform may include, without limitation, web-based platforms, or platforms residing internal to the firewall of a business or government enterprise.

The user platform **101** employed herein may refer to any communication device including, without limitation, laptop computer, desktop computer, personal computer, television or mobile computing device, including, without limitation, personal digital assistant, tablet PC or mobile phone, nominally including a web browser, and which is subject to use by a user or trainee (i.e., person) for accessing (or attempting to access) VR contents of the present invention. The user platform 101 is essentially configured to securely launch VR and track training data associated with the trainee thereof.

In an embodiment, the user platform **101** includes a desktop application (e.g., VR training desktop application). The term "desktop application" is used to collectively refer to typical applications that are run locally on a single computer, such as a local computer system, for example, by a user at a terminal coupled to the computing system. The desktop application also refers to applications that generate and/or use graphical user interfaces (GUIs) for user interaction rather than those built with web interfaces that allow user interaction through a web browser. User input may be received using an input device. Desktop applications work with local resources, including data, files that reside on local storage devices such as hard disks or other such storage media that may be coupled to and/or resident on the local computer system. The local computer system may be a workstation, personal computer, desktop computer, notebook, laptop computer, or any computing device with a processor, memory, storage, including removable storage/media, input-output (I/0) devices, and/or other resources that is capable of running an interactive desktop application. Local computer systems may be coupled to a network (not shown) and to a monitor and one or more I/O devices.

The back office **102** employed herein is essentially a back-end system that may be a remotely located computer facility. It is preferred that the back office **102** is configured for self-managing training, data, and users. A person of ordinary skill in the art will recognise that one or more of a variety of computing systems may be used in addition to or as an alternative to the back offices and/or other computing components described herein.

The server **103** preferably comprises a database configured for, among others, storing all VR contents and data of the present invention. The server **103** includes a cloud server, an on-premises server, and any combination thereof. The cloud server may generally indicate an infrastructure in which a VR environment is configured in the user platform **101.** The cloud server may dynamically allocate or remove a hardware resource and may include a public cloud server and a home cloud server. Unlike the cloud server that runs on remote server computers, the on-premises server refers to software installed and run on computers on the premises (e.g. at a facility owned or controlled by the customer and/or developer). The term "on-premises" may mean physically located in the same facility and/or building or coupled with the same local network.

The VR training module **200** is preferably configured for selectively rendering one or more VR contents representing (and for populating) the hands-on VR environment, training, and evaluation to a trainee on the user platform **101** via the server **103.** The one or more VR contents ((or virtual reality content item) is information capable of being presented to a user via a VR device. In particular, the VR content includes digital visual and/or audio information capable of being presented to a trainee via a VR device. For example, the VR content includes virtual reality video (e.g., digital video, three-dimensional videos, and/or spherical panorama digital videos), virtual reality images (e.g., digital images, three-dimensional images and/or spherical panorama digital images), virtual reality avatars, virtual reality structures, virtual locations, virtual environments, virtual objects, music, or sound effects provided to a user via a VR device. Virtual reality content can also include haptic content, such as causing vibration of a virtual reality device, controller, chair, watch, or wearable device (e.g., increase or start "rumbling" of a controller). The VR content may be retrieved, triggered, initiated, prompted, or called from the VR training module **200,** which, in turn, sends or transmits the same to the database of the server **103.**

In one preferred embodiment, the VR training module **200** comprises a source code module **201.** The source code module **201** preferably comprises a VR plugin or component and three-dimensional (3D) and coding assets. In one nonlimiting representative embodiment, the VR plugin and 3D and coding assets refer to text written using format and syntax consistent with a programming language that it is written in that it is an executable description of system software. For example, they include high-level languages and other representation of systems. In exemplary embodiments, they are automatically translated into machine code (such as binary machine code) for execution on a processor (or other processing unit). The translation into binary machine code may occur in a single step or in several steps and may occur at different times. For example, in exemplary embodiments, an interpreter translates them to machine code and executes it on the fly. In exemplary embodiments, a compiler translates them to machine code and stores the machine code in one or more executable files that can be subsequently executed. The VR plugin and/or 3D and coding assets may be a program code written in a dynamically typed language to make up a software application. The instructions may be expressed in one or more programming languages (e.g. Java, C, C++, or a combination of the like), as compiled or un-compiled instructions, in an intermediate language (IL), in bytecode, as objects, or the like. A deliverable of the source code module **201,** for instance, maybe a file, element, object, module, or the like. The deliverable may also refer to any software module or instructions in any state, that can be assembled into a larger software application, program, and/or tool.

The VR plugin or component of the present invention is preferably configured to be a "mandatory plugin" that is capable of interacting, communicating, and/or establishing a connection between the VR training module **200** and the central platform **100** over any suitable network. In one representative embodiment, the VR plugin or component employed herein may refer to a separate computer program (e.g., software component, executable instructions) that runs or executes in its own (independent) process to provide features and functionality to the server **103** for the purpose of hands-on VR training, for instance. In practice, the VR plugin or component must be used to support the aforementioned communication approach. In another representative embodiment, the VR plugin or component may be a software application wrapper and provide an interface between the VR training module **200** and the central platform **100.** The VR plugin or component, which may also be known as extensions, software agents, software development kits (SDK), add-ons, add-ins, snap-ins, or scriptlets, may mean a hardware processor-executable software layer or code that is a customised application that works in conjunction with the system, or a third-party application. Advantageously, the VR plugin or component is adapted to enable real-time data tracking for training performance evaluation, user access authentication, and back office management.

It is preferred that the VR plugin or component of the present invention comprises a division code embedded therein. The division code is preferably represented by a string of alphanumerical characters. The term "alphanumerical characters" is intended to mean a chain of numbers, a chain of letters or a chain of characters having at least one number and at least one letter. The term is also intended to include, but not limited to, all symbols, grammatical or otherwise, that can be entered using a keyboard.

In an embodiment, the division code preferably includes a sub-procedure code, a procedure code, and a chapter code adapted for permitting real-time data tracking by the VR plugin or component that collects sub-procedure data including time taken and status of sub-procedure completion by the trainee, procedure data including time taken and status of procedure completion by the trainee, and chapter data including time taken and status of chapter completion by the trainee, respectively. These codes may be used alone or in combination with each other and/or other agents or components as otherwise described herein. For instance, the multi-tenancy VR system may employ only a sub-procedure code to collect sub-procedure data. The multi-tenancy VR system may employ a combination of the sub-procedure code and the procedure code, or a combination of the sub-procedure code, the procedure code and the chapter code, in the present invention. It is also envisaged that the multi-tenancy VR system may employ a combination of the sub-procedure code and the chapter code.

The sub-procedure code, which is associated with one or more sub-procedures associated with the hands-on training thereof, preferably permits, enables, triggers and/or initiates real-time data tracking by the VR plugin or component that collects sub-procedure data (associated with the one or more sub-procedures thereof) including time taken and status of sub-procedure completion by the trainee with respect to the one or more VR contents rendered thereof. The term "time taken" may refer to the time taken by the trainee to complete a sub-procedure. The term "completion" may refer to a sub-procedure that has been resolved and/or completed by the trainee. The term "status" may refer to the ratio of the elapsed time of a sub-procedure to its running time. In one representative implementation, the status of sub-procedure completion includes an "incomplete" status which indicates that the trainee skips any sub-procedure, a "complete" status which indicates that the trainee completes all sub-procedures within a threshold period (e.g., the time taken by trainee is lower than or equal to a threshold time), and a "fail" status which indicates that the trainee completes all sub-procedures beyond a threshold period (e.g., the time taken by trainee is more than a threshold time) and/or the trainee commits one or more wrong steps pertaining to a particular sub-procedure.

The procedure code, which is associated with one or more procedures associated with the hands-on training thereof, preferably permits, enables, triggers and/or initiates real-time data tracking by the VR plugin or component that collects procedure data (associated with the one or more procedures thereof) including time taken and status of procedure completion by the trainee with respect to the one or more VR contents rendered thereof. The term "time taken" may refer to the time taken by the trainee to complete a procedure. The term "completion" may refer to a procedure that has been resolved and/or completed by the trainee. The term "status" may refer to the ratio of the elapsed time of a procedure to its running time. In one representative implementation, the status of procedure completion includes an "incomplete" status which indicates that the trainee skips any procedure, a "complete" status which indicates that the trainee completes all procedures within a threshold period (e.g., the time taken by trainee is lower than or equal to a threshold time), and a "fail" status which indicates that the trainee completes all procedures beyond a threshold period (e.g., the time taken by trainee is more than a threshold time) and/or the trainee commits one or more wrong steps pertaining to a particular procedure.

The chapter code, which is associated with one or more chapters associated with the hands-on training thereof, preferably permits, enables, triggers and/or initiates real-time data tracking by the VR plugin or component that collects chapter data (associated with the one or more chapters thereof) including time taken and status of chapter completion by the trainee with respect to the one or more VR contents rendered thereof. The term "time taken" may refer to the time taken by the trainee to complete a chapter. The term "completion" may refer to a chapter that has been resolved and/or completed by the trainee. The term "status" may refer to the ratio of the elapsed time of a chapter to its running time. In one representative implementation, the status of chapter completion includes an "incomplete" status which indicates that the trainee skips any chapter, a "complete" status which indicates that the trainee completes all chapters within a threshold period (e.g., the time taken by trainee is lower than or equal to a threshold time), and a "fail" status which indicates that the trainee completes all chapters beyond a threshold period (e.g., the time taken by trainee is more than a threshold time) and/or the trainee commits one or more wrong steps pertaining to a particular chapter.

In one embodiment, the term "procedure" is used to collectively refer to tasks associated with a training module (which is a part of the VR training module 201) such as actions, steps, events, ways, means, techniques, tests, examinations, and other operations associated with a training to achieve particular ends. The term "sub-procedure", hence, refers to a subset which is a part of a procedure being a larger group of related things. The sub-procedure is preferably a set each of whose elements is an element of an inclusive set. The "procedure", in an embodiment, is a subset of a "chapter". The "chapter" preferably comprises a group of "procedures" that belong together within that group. Accordingly, the VR plugin or component, by way of the sub-procedure code, accumulates the sub-procedure data collected thereof to produce procedure data, which, in turn, is accumulated to produce chapter data. The chapter data shall be accumulatively collected and rendered as module session data. It is further envisaged that the VR training module 201 may include a sub-sub-procedure which refers to a subset which is a part of a sub-procedure being a larger group of related things and so forth.

It is preferred that the VR plugin or component of the present invention comprises an access authentication component embedded therein. The access authentication component preferably permits, enables, triggers and/or initiates access authentication by the VR plugin or component that communicates a token code received from the user platform **101** with the server **103.** The token code is preferably represented by a string of alphanumerical characters. The term "alphanumerical characters" is intended to mean a chain of numbers, a chain of letters or a chain of characters having at least one number and at least one letter. The term is also intended to include, but not limited to, all symbols, grammatical or otherwise, that can be entered using a keyboard. The database of the server **103** preferably communicates the VR content, online and/or offline, between the VR training module **200** and the user platform **100,** and/or authenticates the token code transmitted from the VR plugin **201.**

In one example, the access authentication is initiated by the user (e.g., trainee) based on a user request or user command via the user platform **101,** which also triggers the launching of the VR training module **200.** The user platform **101** then sends a token code to the VR plugin or component thereof. The VR plugin or component transmits the token code received from the user platform **101** to the server **103** for access authentication. The server **103** may be configured to match the token code transmitted by the VR plugin or component with the one in the database in order to authenticate access to the user based on the token code thereof. The server **103** may use any other ways of access authentication in conjunction with the token code with or without any other authentication information, particulars or documents. Once the access authentication is duly executed by and/or at the server **103,** the server **103** transmits an access authentication decision or result to the VR plugin or component, which shall notify the user of the same. If the access authentication is successful (e.g., the token code matches with the database of the server **103**), then access to the VR training module **200** is granted to the user. If the access authentication is not successful (e.g., the token code does not match with the database of the server **103**), then access to the VR training module **200** is denied to the user. The term "user request" or "user command", as used herein, is generally defined as any instance of communication from the user to the application platform that causes the application platform to perform some sort of transaction or segment of a transaction (e.g., access authentication). User requests may comprise, without limitation, user keystrokes, keystroke combinations, or keystroke representations (e.g., ASCII representations of user keystrokes or combinations), keypad entries or combinations or representations thereof, conveying instructions or information to the application platform.

According to one embodiment, the VR plugin or component comprises a module code and a tenant code embedded therein. The module code and the tenant code are preferably represented by a string of alphanumerical characters. The term "alphanumerical characters" is intended to mean a chain of numbers, a chain of letters or a chain of characters having at least one number and at least one letter. The term is also intended to include, but not limited to, all symbols, grammatical or otherwise, that can be entered using a keyboard.

It is preferred that the module code and the tenant code, together with the division code thereof (e.g., the sub-procedure code, the procedure code and/or the chapter code), preferably permit, enable, trigger, and/or initiate data upload and data pairing between the VR training module **101** and the back office **102** thereof. In an embodiment, with respect to data upload, the back office **102** needs to obtain corresponding data of the VR training module **200,** with an application made by the back office **102** (being the calling party), the data provided by the VR training module **200** (being the called party), the data received from the back office **102.** It may refer to an operation in which the VR training module **200** transmits stored data therein to the back office **102.** With respect to the said data pairing, it is envisaged that the division code (i.e., the sub-procedure code, the procedure code and/or the chapter code), the module code and the tenant code are being paired between the VR training module **200** and the back office **102.**

Among others, the present invention preferably generates score data associated with the hands-on training for evaluating and assessing the competency of the trainee. The evaluation of training performance is essentially concluded based on real-time data tracking contributed by the VR plugin of the source code module **201** of the VR training module **200** thereof. By using real-time data tracking, the present invention is able to score and evaluate each user's training performance, control and authenticate each user's access to the system, and allow back office self-management for each tenant. The term "score" refers to an integer or number, that can be determined mathematically, for example by using computational models. The score data may refer to any grade, level, rank, amount, total, or other value, whether numerical, graphical, oral, or textual, representing the training performance of the user. The user may also be presented with a completion certificate with or without any score data. In one representative implementation, the sub-procedure data shall be fed to produce procedure data. The procedure data preferably includes score data which may include a point score (%) and a criticality score assignable to any sub-procedure (e.g., Yes/No). The procedure data shall be accumulated to produce chapter data which is used to form module session data (or module data). The module session data shall indicate module outcome whether, for instance, the trainee passes or fails.

By way of example, in one or more embodiments, the VR training module **200** generates VR content and designates one or more target user responses and/or target user actions corresponding to the VR content. The term "user response" refers to a characteristic, condition, or state of a user. The term "user response" includes an emotional or physical state or condition of a user. The term "target user response" refers to a chosen, selected, wanted, unwanted, preferred, or disfavoured user response. The term "target user response" refers to a user response that is sought to be elicited or avoided. A target user response can also include a user response that the VR training module **200** seeks to avoid. Moreover, the term "user action" refers to any conduct (or lack of conduct), behaviour, activity, or user input. In particular, the term user action includes the conduct, behaviour, or user input of a user of a virtual reality device. To illustrate, the term "user action" includes moving a tool from an original position to a destination, interacting with a virtual element within a virtual environment, starting (or stopping) an activity (e.g., starting a virtual reality game or leaving a virtual reality environment), an amount of time spent on a particular activity (e.g., an amount of time completing a task), turning on (or turning off) a device (e.g., turning off a virtual reality device), or changing a location (e.g., entering or leaving a virtual location). Similarly, a "target user action" refers to a chosen, selected, wanted, unwanted, preferred, or disfavoured user action. For example, a target user action can include a user action that the VR training module **200** seeks to elicit from a user experiencing virtual reality content. A target user action can also include a user action that the VR training module **200** seeks to avoid (e.g., the VR training module **200** wants to avoid a user leaving a particular location in a virtual environment).

By using schema isolation, each tenant within the ecosystem will have their own schema within the same database. This ensures that each tenant and their data is being isolated from other tenants within the system. This contributes to stronger data security and privacy. Each tenant can only access data within their own schema and cannot access data from other tenants/schema. With respect to flexibility of management, each tenant has the ability to have their own unique set of customisation and configuration without affecting other tenants. As with the system scalability, any system maintenance, backup, settings, update, or addition of new tenants, can happen on a schema level for each tenant, thus not affecting all other existing tenants. Each tenant has their own library of VR training module applications, hosted in their own schema.

In one representative embodiment, the tenant includes the system owner, system organisation (client organisations that are managed by the system owner), developer (other parties that use this platform to serve their clients, usually middleman, system integrators, resellers/distributors, and other VR content creators), and developer organisation (client organisations that are managed by specific "developer"). As with the roles, the system owner is the system admin (roles that have access to manage all developers and organisations within the system), and the developer is the developer admin (roles that have access to manage their own developer tenant, and all developer organisations within their management). With respect to the system/developer organisation, a super admin has the highest hierarchy within an organisation, which has access to everything within the organisation, a group admin (role to manage a specific group within an organisation), a course admin (role to manage a specific course within an organisation), and a user (trainees who will be using the VR training application).

For clarity, the method of providing hands-on VR environment, training, and evaluation therefor, described in conjunction with the system in the preceding paragraphs will be summarised as follows:
(a) providing a multi-tenancy VR system comprising a central platform **100** having a user platform **101** and a back office **102** connected to a server **103,** and a VR training module **200** in communication with the central platform **100** comprising a source code module **201,**
   wherein step (a) includes preparing the source code module **201** comprising a VR plugin or component having a division code embedded therein;
(b) selectively rendering, by the VR training module **200,** one or more VR contents representing the hands-on VR environment, training, and evaluation to a trainee on the user platform **101** via the server **103**; and
(c) initiating, by the VR plugin or component by way of the division code, real-time data tracking comprising collecting division data including time taken and status of division completion by the trainee with respect to the one or more VR contents rendered thereof.

Although the method is depicted as a sequence of numbered steps for clarity, the numbering does not necessarily dictate the order of the steps. It should be understood that some of these steps may be skipped, performed in parallel, or performed without the requirement of maintaining a strict order of sequence.

The multi-tenancy VR system of the present invention may, for example, be implemented as one or more operating systems, as one or more stand-alone applications, as one or more modules of an application, as one or more library functions or functions that may be called by other applications, and/or as a cloud-computing model. Thus, the multi-tenancy VR system may be implemented as a stand-alone application, such as a desktop or mobile application. Furthermore, the multi-tenancy VR system may be implemented as one or more web-based applications hosted on a remote server. The multi-tenancy VR system may also be implemented in a suite of mobile device applications or "apps".

In some embodiments, a VR device suitable for use with the present invention may include a computing device with a head-mounted display and speakers. The VR device can provide a view of a virtual environment via the head-mounted display and modify the view of the virtual environment based on user movements to simulate physical presence in the virtual environment. The VR device also includes a number of biometric data sensors. Specifically, the VR device includes a hear rate monitor (e.g., a monitor with an optical sensor that measures pulse through the skin), a breathing rate monitor (e.g., a sensitive microphone that detects breathing rate and volume, a strap that measures expansion of the lungs, and/or sensors that measure oxygen in the blood), a blood pressure monitor (e.g., sensors that measure blood pressure through contact with the forehead or other part of the body), a temperature sensor (e.g., a monitor affixed to the forehead, ears, mouth, etc.), a head motion sensor (e.g., gyroscopes, accelerometers, and other sensors for tracking head movement), a moisture sensor (e.g., a sensor that detects perspiration at the forehead or other parts of the body), an eye sensor (e.g., a camera pointed towards the eyes that track eye movement, whether the eyes are open or closed, eye coloration, and/or pupil dilation), or a face shape monitor (e.g., a camera pointed towards all or part of a face to track, for example, mouth shape). In other embodiments, the VR device can include a subset of these biometric sensors and/or additional biometric sensors.

Embodiments of the present disclosure may comprise or utilise a special-purpose or general-purpose computer, including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium (e.g., a memory, etc.), and executes those instructions, thereby performing one or more processes, including one or more of the processes described herein.

Computer-readable media can be any available media that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilise transmission media.

Computer-executable instructions comprise, for example, instructions and data which, when executed at a processor, cause a general-purpose computer, special-purpose computer, or special-purpose processing device to perform a certain function or group of functions. In some embodiments, computer-executable instructions are executed on a general-purpose computer to turn the general-purpose computer into a special purpose computer implementing elements of the disclosure. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practised in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Although an overview of the inventive subject matter has been described with reference to specific example embodiments, various modifications and changes may be made to these embodiments without departing from the broader scope of embodiments of the present disclosure. Such embodiments of the inventive subject matter may be referred to herein, individually or collectively, by the term "invention" merely for convenience and without intending to voluntarily limit the scope of this application to any single disclosure or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

The foregoing description, for the purpose of explanation, has been described with reference to specific example embodiments. However, the illustrative discussions above are not intended to be exhaustive or to limit the possible example embodiments to the precise forms disclosed. Many modifications and variations are possible in view of the above teachings. The example embodiments were chosen and described in order to best explain the principles involved and their practical applications, to thereby enable others skilled in the art to best utilise the various example embodiments with various modifications as are suited to the particular use contemplated.

It will also be understood that, although the terms "first", "second", and so forth may be used herein to describe various elements, these elements should not be limited by these terms. These terms are only used to distinguish one element from another. For example, a first contact could be termed a second contact, and, similarly, a second contact could be termed a first contact, without departing from the scope of the present example embodiments. The first contact and the second contact are both contacts, but they are not the same contact.

The terminology used in the description of the example embodiments herein is for the purpose of describing particular example embodiments only and is not intended to be limiting. As used in the description of the example embodiments and the appended examples, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting" depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]" depending on the context.

## Claims

1. A multi-tenancy virtual reality, VR, system for providing hands-on VR environment, training, and evaluation therefor, **characterised in that,** the multi-tenancy VR system comprising:
a central platform (100) comprising a user platform (101) and a back office (102) connected to a server (103); and
a VR training module (200) in communication with the central platform (100) comprising a source code module (201) configured for selectively rendering one or more VR contents representing the hands-on VR environment, training, and evaluation to a trainee on the user platform (101) via the server (103),
wherein the source code module (201) comprises a VR plugin or component having a division code embedded therein, which permits real-time data tracking by the VR plugin or component that collects division data, including time taken and status of division completion by the trainee with respect to the one or more VR contents rendered thereof.

2. The multi-tenancy VR system according to Claim 1, wherein the VR plugin or component comprises an access authentication component embedded therein, which permits access authentication by the VR plugin or component that communicates a token code received from the user platform (101) with the server (103).

3. The multi-tenancy VR system according to Claim 1, wherein the VR plugin or component comprises a module code and a tenant code embedded therein, which, together with the division code, permits data upload and pairing between the VR training module (200) and the back office (102) thereof.

4. The multi-tenancy VR system according to Claims 1 and 3, wherein the division code is represented by a string of alphanumerical characters.

5. The multi-tenancy VR system according to Claims 1 and 3, wherein the module code is represented by a string of alphanumerical characters.

6. The multi-tenancy VR system according to Claims 1 and 3, wherein the tenant code is represented by a string of alphanumerical characters.

7. The multi-tenancy VR system according to Claim 1, wherein the source code module comprises three-dimensional model and coding assets.

8. The multi-tenancy VR system according to Claim 1, wherein the division code includes a sub-procedure code, a procedure code, and a chapter code adapted for permitting real-time data tracking by the VR plugin or component that collects sub-procedure data including time taken and status of sub-procedure completion by the trainee, procedure data including time taken and status of procedure completion by the trainee, and chapter data including time taken and status of chapter completion by the trainee, respectively.

9. The multi-tenancy VR system according to Claims 1 and 8, wherein the VR plugin or component, by way of the sub-procedure code, accumulates the sub-procedure data collected thereof to produce the procedure data, which, in turn, is accumulated to produce the chapter data which accumulatively becomes module session data.

10. The multi-tenancy VR system according to Claims 1 and 2, wherein the server (103) includes a cloud server, an on-premises server, and any combination thereof comprising a database from which the one or more VR contents, online and/or offline, are communicated between the VR training module (200) and the user platform (101), and from which the token code transmitted from the VR plugin is authenticated.

11. A method of providing hands-on virtual reality, VR, environment, training, and evaluation therefor, **characterised in that,** the method comprising the steps:
providing a multi-tenancy VR system comprising a central platform (100) having a user platform (101) and a back office (102) connected to a server (103), and a VR training module (200) in communication with the central platform (100) comprising a source code module (201),
wherein the step of providing a multi-tenancy VR system includes preparing the source code module (201) comprising a VR plugin or component having a division code embedded therein;
selectively rendering, by the VR training module (200), one or more VR contents representing the hands-on VR environment, training, and evaluation to a trainee on the user platform (101) via the server (103); and
initiating, by the VR plugin or component by way of the division code, real-time data tracking comprising collecting division data including time taken and status of division completion by the trainee with respect to the one or more VR contents rendered thereof.
